(19) Europäisches Patentamt
European Patent Office
Office européen des brevets

(11) **EP 3 066 329 B1**

(12) **FASCICULE DE BREVET EUROPEEN**

(45) Date de publication et mention
de la délivrance du brevet:
**18.10.2017 Bulletin 2017/42**

(21) Numéro de dépôt: **14825377.6**

(22) Date de dépôt: **24.10.2014**

(51) Int Cl.:
*F02K 9/00* $^{(2006.01)}$      *F02C 9/00* $^{(2006.01)}$
*F02K 9/96* $^{(2006.01)}$      *G01M 15/02* $^{(2006.01)}$
*G01M 15/14* $^{(2006.01)}$

(86) Numéro de dépôt international:
**PCT/FR2014/052713**

(87) Numéro de publication internationale:
**WO 2015/067872 (14.05.2015 Gazette 2015/19)**

(54) **PROCEDE D'ESSAI TECHNIQUE ET UNITÉ ÉLECTRONIQUE DE COMMANDE**

TESTVERFAHREN UND ELEKTRONISCHE STEUERUNGSEINHEIT

PROCESS OF TESTING AND ELECTRONIC CONTROL UNIT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.11.2013 FR 1360840**

(43) Date de publication de la demande:
**14.09.2016 Bulletin 2016/37**

(73) Titulaire: **Snecma**
**75015 Paris (FR)**

(72) Inventeurs:
• **LE GONIDEC, Serge**
**F-27200 Vernon (FR)**
• **REICHSTADT, Sébastien**
**F-92600 Asnieres / Seine (FR)**
• **MUSTA, Virgil**
**F-27200 Vernon (FR)**

(74) Mandataire: **Calvo de Nó, Rodrigo et al**
**Cabinet Beau de Loménie**
**158, rue de l'Université**
**75340 Paris Cedex 07 (FR)**

(56) Documents cités:
**FR-A1- 2 939 170     FR-A1- 2 965 915
FR-A1- 2 966 928**

EP 3 066 329 B1

**Description**

Arrière-plan de l'invention

La présente invention concerne un procédé d'essai technique d'un dispositif pour évaluer au moins un paramètre de fonctionnement du dispositif sur une séquence de plusieurs paliers de fonctionnement, chaque palier correspondant à une valeur stable d'au moins une consigne de fonctionnement du dispositif.

Dans le domaine des essais techniques, il est courant d'essayer le dispositif à plusieurs régimes de fonctionnement différents pouvant être rencontrés pendant l'utilisation du dispositif soumis à l'essai technique, et ceci afin de caractériser l'ensemble du domaine de fonctionnement du dispositif de la manière la plus complète possible. Typiquement ceci est mis en oeuvre en suivant, pendant l'essai, une séquence de plusieurs paliers de fonctionnement, chaque palier de fonctionnement étant maintenu pendant une durée de temps prédéterminée ayant été considérée suffisante pour garantir la qualité des informations concernant des paramètres de fonctionnement du dispositif qui sont obtenues pendant la durée de ce palier.

Toutefois, suivre une telle séquence de paliers de fonctionnement à durée prédéterminée peut résulter en une durée globale considérable des essais. Or, pour des raisons principalement économiques il est souhaitable de limiter cette durée globale des essais. En outre, l'ajustement de la durée individuelle de chaque palier de fonctionnement permettrait d'essayer un plus grand nombre de valeurs des consignes de fonctionnement, permettant ainsi une caractérisation plus complète du domaine de fonctionnement du dispositif soumis à l'essai. Le document FR2965915divulgue un système et un procédé de surveillance correspondant d'un banc d'essai d'au moins un composant d'un moteur d'aéronef.

Objet et résumé de invention

Le procédé d'essai décrit dans la présente divulgation vise à remédier à ces inconvénients. En particulier, cette divulgation vise à proposer un procédé d'essai technique d'un dispositif pour évaluer au moins un paramètre de fonctionnement du dispositif sur une séquence de plusieurs paliers de fonctionnement, qui permette de réduire la durée globale des essais et/ou d'augmenter le nombre de paliers de fonctionnement, dans ladite séquence tout en maintenant la qualité des informations recueilles pendant ces essais concernant l'au moins un paramètre de fonctionnement du dispositif.

Dans au moins un mode de réalisation, ce but est atteint grâce au fait que le procédé comprenant au moins les étapes suivantes pour chaque palier de fonctionnement :

échantillonnage temporel de valeurs de l'au moins un paramètre de fonctionnement du dispositif ;
filtrage des valeurs échantillonnées pour obtenir un signal filtré pour chaque paramètre de fonctionnement ;
calcul de la variance des valeurs échantillonnées pour chaque paramètre de fonctionnement dans une fenêtre d'échantillonnage pendant ledit palier de fonctionnement ;
calcul de la valeur absolue de la dérivée temporelles du signal filtré pour chaque paramètre de fonctionnement ;
changement de valeur de ladite consigne de fonctionnement quand, pour chaque paramètre de fonctionnement, la variance des valeurs échantillonnées et la valeur absolue de la dérivée temporelle du signal filtré sont inférieures à des seuils respectifs prédéterminés sur au moins une durée minimale prédéterminée.

La variance des valeurs échantillonnées et la dérivée temporelle du signal filtré sont indicatives de la stabilité des valeurs échantillonnées. En conséquence, quand les valeurs de cette variance et de la valeur absolue de cette dérivée passent en dessous de leurs seuils inférieurs respectifs, on peut considérer que les valeurs échantillonnées pendant le palier de fonctionnement sont suffisamment stables pour être représentatives du fonctionnement stationnaire du dispositif avec la consigne de fonctionnement correspondant à ce palier de fonctionnement, Il est donc possible de conclure ce palier de fonctionnement pour passer au prochain et les valeurs échantillonnées pour chaque paramètre de fonctionnement et/ou le signal filtré correspondant pourront être utilisés pour calculer une espérance mathématique représentant le comportement du paramètre de fonctionnement correspondant pour la consigne de fonctionnement correspondant à ce palier de fonctionnement

Il est toutefois envisageable que les valeurs échantillonnées ne se stabilisent pas suffisamment même après une période prolongée dans ce palier de fonctionnement. Pour éviter que la consigne de fonctionnement soit donc maintenue de manière indéfinie, sans passer au palier de fonctionnement suivant et donc sans compléter l'essai technique du dispositif, le changement de valeur de l'au moins une consigne de fonctionnement pour passer au palier suivant peut être effectué après un délai de temps prédéterminé, même si pour au moins un paramètre de fonctionnement la variance des valeurs échantillonnées et/ou la valeur absolue de la dérivée temporelle du signal filtré ne sont pas encore inférieures à leurs seuils inférieurs respectifs.

L'échantillonnage de valeurs de l'au moins un paramètre de fonctionnement du dispositif peut notamment être effectué à des intervalles régulières dans le temps. Afin d'assurer un filtrage efficace des valeurs échantillonnées, celui-ci peut notamment être effectué par au moins un filtre de Kalman, quoique d'autres types de filtres peuvent être envisagés alternativement ou en complément à celui-ci.

Pour certaines valeurs de l'au moins une consigne de fonctionnement, les paramètres de fonctionnement peuvent s'avérer comme étant clairement trop instables pour permettre le calcul d'une espérance mathématique significative, indépendamment de la durée du palier de fonctionnement. Afin d'identifier rapidement une telle situation et interrompre le palier de fonctionnement pour passer au palier suivant, le procédé d'essai peut comprendre aussi les étapes suivantes :

calcul du coefficient de dissymétrie des valeurs échantillonnées pour chaque paramètre de fonctionnement dans ladite fenêtre d'échantillonnage ;
calcul de la variance de la dérivée temporelle du signal filtré pour chaque paramètre de fonctionnement ; et
changement de valeur de ladite consigne de fonctionnement si le coefficient de dissymétrie des valeurs échantillonnées pour au moins un paramètre de fonctionnement excède un seuil supérieur prédéterminé et/ou les variances des valeurs échantillonnées et de la dérivée temporelle du signal filtré pour au moins un paramètre de fonctionnement excèdent des seuils supérieurs prédéterminés respectifs.

Afin d'obtenir une réaction rapide à partir de la stabilisation des paramètres de fonctionnement X, la fenêtre d'échantillonnage peut notamment être une fenêtre glissante, correspondant donc aux n derniers échantillonnages effectués dans ce palier de fonctionnement. Alternativement toutefois, la fenêtre d'échantillonnage pourrait aussi ne pas être glissante, mais avoir un début fixe au commencement du palier de fonctionnement, ou après un intervalle initial après ce commencement du palier de fonctionnement.

Ce procédé d'essai peut notamment être utilisé pour essayer des moteurs, plus particulièrement des moteurs-fusées à propergols liquides, et notamment des moteurs-fusées à propergols liquides comprenant des systèmes d'alimentation par turbopompes. Toutefois, ce procédé d'essai peut aussi être utilisé pour essayer d'autres types de dispositifs, et notamment des turbomachines.

La présente divulgation concerne également une unité électronique de commande avec au moins une entrée de données pour recevoir au moins un paramètre de fonctionnement d'un dispositif et au moins une sortie de données pour transmettre au moins une consigne de fonctionnement audit dispositif. Dans au moins un mode de réalisation, cette unité électronique de commande est configurée pour :

commander un palier de fonctionnement du dispositif correspondant à une valeur stable de ladite consigne de fonctionnement du dispositif ;
échantillonner dans le temps des valeurs de l'au moins un paramètre de fonctionnement du dispositif ;
filtrer les valeurs échantillonnées pour obtenir un signal filtré pour chaque paramètre de fonctionnement ;
calculer la variance des valeurs échantillonnées pour chaque paramètre de fonctionnement à partir du début dudit palier de fonctionnement ;
calculer la valeur absolue de la dérivée temporelle du signal filtre pour chaque paramètre de fonctionnement ; et
commander un nouveau palier de fonctionnement en modifiant la valeur de ladite au moins une consigne de fonctionnement quand, pour chaque paramètre de fonctionnement, la variance des valeurs échantillonnées et la valeur absolue de la dérivée temporelle du signal filtré sont inférieures à des seuils inférieurs respectifs prédéterminés sur au moins une durée minimale prédéterminée.

Finalement, la présente divulgation concerne aussi un support informatique comprenant un ensemble d'instructions pour effectuer le procédé d'essai susmentionné. On entend par «support informatique » tout dispositif de stockage de données pouvant être lu par un système informatique. Un tel support informatique peut notamment être un dispositif de stockage magnétique de données, tel qu'un disque ou bande magnétique, un dispositif de stockage optique de données, tel qu'un disque optique, ou un dispositif de stockage électronique de données, tel qu'une mémoire électronique volatile ou non-volatile.

Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :

- la figure 1 illustre schématiquement un moteur-fusée à propergols liquides et alimentation par turbopompes dans un banc d'essais comprenant une unité de commande électronique suivant un mode de réalisation de la présente invention ;

- la figure 2 est un schéma de procédé illustrant un procédé d'essai suivant un mode de réalisation de l'invention ;
- la figure 3A est un graphique illustrant l'évolution d'un paramètre de fonctionnement du moteur-fusée de la figure 1, et d'un signal filtré correspondant à ce paramètre, pendant un palier de fonctionnement dans un essai du moteur fusée quand ce paramètre de fonctionnement se stabilise avant une durée maximale prédéterminée du palier de fonctionnement ;
- la figure 3B est un graphique illustrant l'évolution du même paramètre et du signal filtré correspondant quand le paramètre de fonctionnement ne se stabilise pas suffisamment avant ladite durée maximale du palier de fonctionnement ;
- la figure 3C est un graphique illustrant l'évolution du même paramètre et du signal filtré correspondant quand le palier de fonctionnement est interrompu à cause d'une trop grande instabilité initiale du paramètre ;
- la figure 4A est un graphique illustrant l'évolution du même paramètre pendant un essai technique comprenant une pluralité de paliers de fonctionnement à durée fixe ; et
- la figure 4B est un graphique illustrant l'évolution du même paramètre pendant un essai technique comprenant une pluralité de paliers de fonctionnement à durée variable commandée suivant un mode de réalisation de la présente invention.

Description détaillée de l'invention

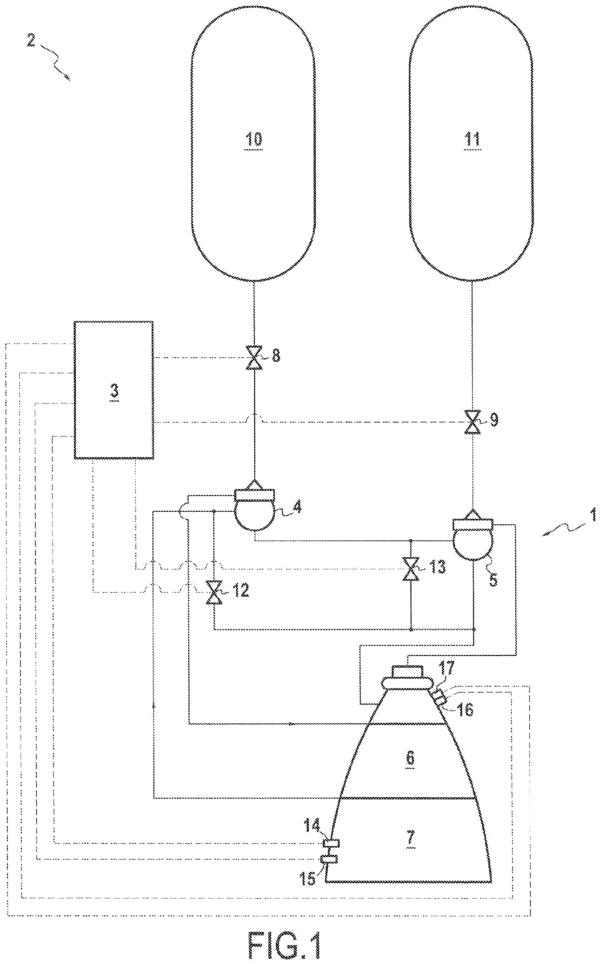

La figure 1 illustre un moteur-fusée 1 à propergols liquides et alimentation par turbopompes, installé dans un banc d'essais 2 dans lequel il est connecté à une unité électronique de commande 3 pour effectuer des essais suivant un profil comprenant une séquence de plusieurs paliers de fonctionnement,

Dans le mode de réalisation illustré, le moteur-fusée 1 est un moteur-fusée du type dit à cycle de détente, dans lequel les turbopompes 4, 5 sont actionnées par l'un des propergols après son passage par un échangeur de chaleur régénératif 6 adjacent aux parois de la chambre propulsive 7 du moteur-fusée 1. Des vannes d'alimentation 8, 9 sont interposées entre les réservoirs 10, 11 contenant les propergols et les turbopompes correspondantes 4, 5, et des vannes de contournement 12, 13 permettent un contournement au moins partiel de ces turbopompes 4, 5 par le propergol chauffé par l'échangeur 6. Toutefois, l'invention n'est nullement limitée aux essais de tels moteurs-fusées, et peut également être appliquée aux essais d'autres types de moteurs et même d'autres dispositifs différents.

Dans le mode de réalisation illustré, le fonctionnement du moteur-fusée 1 peut être piloté par le moyen des vannes d'alimentation 8, 9 et des vannes de contournement 12, 13. Chacune de ces vannes est connectée pour cela à l'unité électronique de commande 3 pour recevoir des consignes de fonctionnement. Le banc d'essais 2 comprend aussi des capteurs, comme par exemple des capteurs de température 14 et de pression 15 dans la chambre propulsive 7, et des capteurs de poussée 16 et de vibration 17 dans les supports du moteur-fusée 1. Ces capteurs 14, 15, 16, 17 sont aussi connectés à l'unité électronique de commande 3 pour lui transmettre des paramètres de fonctionnement du moteur-fusée 1. Cet ensemble de paramètres de fonctionnement X peut comprendre un premier paramètre A, un deuxième paramètre B, et ainsi de suite.

Dans ce banc d'essais 2, le moteur-fusée 1 est destiné à être soumis à des essais comprenant une séquence de paliers de fonctionnement afin d'évaluer les paramètres de fonctionnement X du moteur-fusée 1 captés pendant chacun de ces paliers de fonctionnement Chaque palier de fonctionnement de cette séquence correspond à un ensemble de valeurs stables des consignes de fonctionnement du moteur-fusée 1 et cherche à reproduire des points de fonctionnement pertinents pour une utilisation normale de ce moteur-fusée 1, Ces paramètres de fonctionnement X permettront la caractérisation du moteur-fusée 1 en vue de son réglage avant le vol.

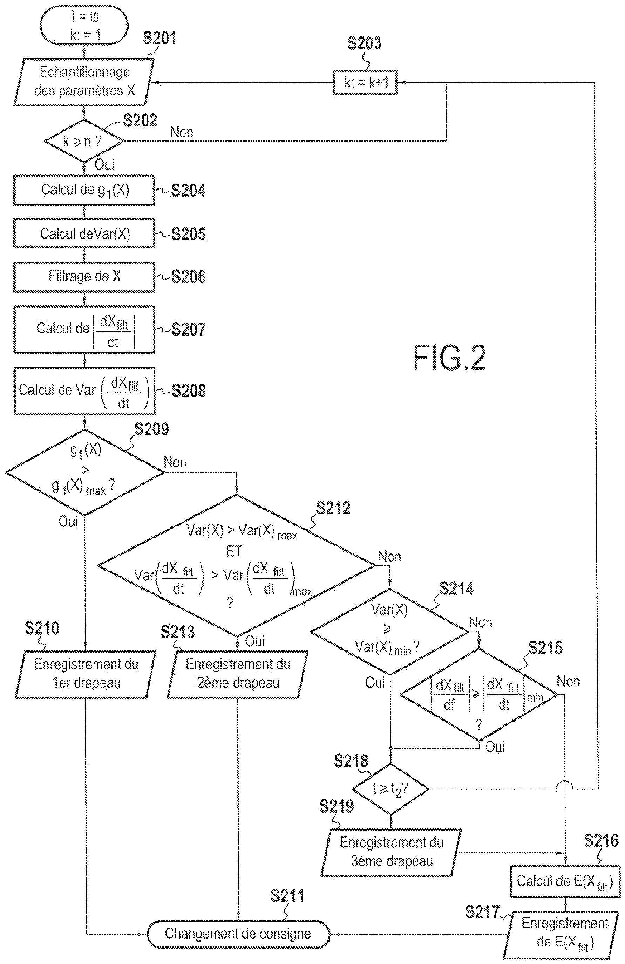

Afin de pouvoir recueillir des valeurs représentatives des paramètres de fonctionnement X du moteur-fusée 1 lors d'un tel essai, chaque palier de fonctionnement doit avoir une durée suffisante pour atteindre un fonctionnement stationnaire ou quasi-stationnaire du moteur-fusée 1. En même temps, une durée excessive des paliers de fonctionnement, et donc de l'essai, présente des inconvénients notamment en termes de coût. Un procédé d'essai permettant de piloter la durée de chaque palier afin d'obtenir des valeurs représentatives des paramètres de fonctionnement X du moteur fusée 1 sans prolonger excessivement la durée de chaque palier est illustré schématiquement sur la figure 2.

Dans ce procédé, un compteur k est initialisé avec une valeur de 1 après le début de chaque palier de fonctionnement dans l'étape S200. Ce compteur k peut être initialisé après un temps d'attente prédéterminé $t_0$ afin d'éviter une phase initiale de transition des paramètres de fonctionnement X captés par les capteurs 14 à 17. Ensuite, des valeurs $X_k$ de ces paramètres de fonctionnement X sont échantillonnées par l'unité électronique de commande 3 dans une étape d'échantillonnage S201.

Dans l'étape suivante S202, l'unité électronique de commande 3 contrôle si le compteur k a atteint au moins un nombre n prédéterminé. Tant que ce nombre n n'est pas atteint, l'unité électronique de commande 3 revient alors à l'étape d'échantillonnage S201, en passant par une étape S203, dans laquelle une unité est ajoutée au compteur k.

Cette boucle de retour peut être temporisée, de manière à ce que l'échantillonnage des paramètres de fonctionnement. X s'effectue à des intervalles réguliers dans le temps. Une fois que le compteur k atteint le nombre n, l'unité électronique de commande 3 passe à l'étape S204, dans laquelle le coefficient de dissymétrie $g_1(X)$ de la succession des n dernières valeurs échantillonnées $X_{k-n+1}$ à $X_k$ pour chaque paramètre de fonctionnement X, est calculé suivant la formule :

$$g_1(X) = \frac{\frac{1}{n}\sum_{i=k-n+1}^{k}\Delta X_i^{\,3}}{\left(\frac{1}{n}\sum_{i=k-n+1}^{k}\Delta X_i^{\,2}\right)^{3/2}}$$

dans laquelle $\Delta X_i$ représente la différence de chaque valeur échantillonnées $X_i$, dans cette fenêtre glissante de n échantillonnages, par rapport à la moyenne de ces n dernières valeurs échantillonnées $X_{k-n+1}$ à $X_k$ pour le paramètre de fonctionnement X correspondant. Ceci peut être exprimé par la formule suivante :

$$\Delta X_i = X_i - \frac{1}{n}\sum_{j=k-n+1}^{k} X_j$$

Dans l'étape suivante S205, l'unité électronique de commande 3 calcule la variance Var(X) des n dernières valeurs échantillonnées $X_{k-n+1}$ à $X_k$ suivant la formule :

$$Var(X) = \frac{\sum_{i=k-n+1}^{k}(X_i)^2}{n} - \left(\frac{\sum_{i=k-n+1}^{k}X_i}{n}\right)^2$$

C'est-à-dire, cette variance Var(X) de chaque paramètre X est égale à la moyenne des carrés des n dernières valeurs échantillonnées $X_{k-n+1}$ à $X_k$, moins le carré de la moyenne des n valeurs échantillonnées $X_{k-n+1}$ à $X_k$.

Dans l'étape suivante S206, le signal correspondant à chaque paramètre X est filtré par l'unité électronique de commande 3, en appliquant par exemple un filtre de Kalman, quoique d'autres filtres peuvent être envisagés en complément ou alternativement à celui-ci, pour obtenir un signal filtré $X_{filt}$. Ensuite, dans l'étape S207, l'unité électronique de commande calcule la valeur absolue de la dérivée temporelle $dX_{filt}/dt$ de ce signal filtré $X_{filt}$ et, dans l'étape S208, la variance $Var(dX_{filt}/dt)$ de cette dérivée temporelle $dX_{filt}/dt$ à partir du début du palier de fonctionnement. Un même filtre, par exemple de Kalman, pourrait fournir les valeurs de la dérivée temporelle $dX_{filt}/dt$ et des variances Var(X) et $Var(dX_{filt}/dt)$.

Sur la base des valeurs du coefficient de dissymétrie $g_1(X)$, variance Var(X), valeur absolue et variance de la dérivée temporelle $dX_{filt}/dt$ calculées dans ces étapes S204 à S208 pour chaque paramètre X dans, l'unité électronique de commande 3 procède ensuite à analyser la qualité des signaux correspondant à chaque paramètre X dans cette fenêtre glissante, Ainsi, dans l'étape S209, le coefficient de dissymétrie $g_1(X)$ pour chaque paramètre X est comparé à un seuil supérieur correspondant $g_1(X)_{max}$. Si l'un de ces coefficients de dissymétrie $g_1(X)$ est supérieur à son seuil $g_1(X)_{max}$, ceci indique une asymétrie excessive des n dernières valeurs échantillonnés $X_{k-n+1}$ à $X_k$, Dans ce cas, l'unité, électronique de commande 3 enregistre un premier drapeau d'alerte concernant cette asymétrie dans une étape S210. Eventuellement, le palier de fonctionnement peut alors être interrompu immédiatement de la manière illustrée, l'unité électronique de commande 3 passant directement à l'étape S211 dans laquelle les consignes de fonctionnement transmises au moteur-fusée 1 sont modifiées pour passer au palier suivant, ou pour arrêter entièrement l'essai si le palier de fonctionnement en cours est le dernier palier prévu ou si certaines autres conditions sont remplies indiquant par exemple un manque de fiabilité persistant des valeurs captées pour les paramètres de fonctionnement X. Alternativement, toutefois, le palier de fonctionnement pourrait être maintenu pendant au moins un délai prédéterminé, comme par exemple une durée maximale $t_2$ du palier de fonctionnement, pour continuer à recueillir des valeurs pour les autres paramètres de fonctionnement X.

Si les valeurs des coefficients de dissymétrie $g_1(X)$ correspondant à chaque paramètre X restent égales ou inférieures à leurs seuils supérieurs respectifs $g_1(X)_{max}$, l'unité électronique de commande 3 peut passer à l'étape S212, dans laquelle la variance Var(X) de chaque paramètre X et la variance $Var(dX_{filt}/dt)$ de la dérivée temporel $dX_{filt}/dt$ du signal filtré $X_{filt}$ correspondant à chaque paramètre X sont comparées à des seuils supérieurs prédéterminés respectifs $Var(X)_{max}$ et $Var(dX_{filt}/dt)_{max}$. Si au moins l'une de ces variances Var(X) et $Var(dX_{filt}/dt)$ est supérieure à son seuil supérieur respectif, ceci indique aussi une qualité défaillante des n dernières valeurs échantillonnées $X_{k-n+1}$ à $X_k$. L'unité

électronique de commande 3 peut alors enregistrer un deuxième drapeau d'alerte dans l'étape S213, concernant une dérive ou bruit excessif signalés par ces variances Var(X) et Var(dX$_{filt}$/dt). Comme dans l'étape S210, le palier de fonctionnement peut alors être interrompu immédiatement de la manière illustrée, l'unité électronique de commande 3 passant directement aussi à l'étape S211 dans laquelle les consignes de fonctionnement transmises au moteur-fusée 1 sont modifiées pour passer au palier suivant, ou pour arrêter entièrement l'essai si le palier de fonctionnement en cours est le dernier palier prévu. Alternativement, toutefois, le palier de fonctionnement pourrait être maintenu pendant au moins un délai prédéterminé, comme par exemple une durée maximale $t_2$ du palier de fonctionnement, pour continuer à recueillir des valeurs pour les autres paramètres de fonctionnement X,

Si les valeurs des variances Var(X) et Var(dX$_{filt}$/dt) restent toutefois égales ou inférieures à leurs seuils maximaux respectifs Var(X)$_{max}$ et Var(dX$_{filt}$/dt)$_{max}$, le palier de fonctionnement peut être maintenu de manière normale sans enregistrer ledit deuxième drapeau d'alerte. Dans l'étape S214, la variance Var(X) de chaque paramètre de fonctionnement X est comparée à un seuil inférieur respectif prédéterminé Var(X)$_{min}$. Si la variance Var(X) d'au moins un des paramètres de fonctionnement X dans la fenêtre glissante des n dernier échantillonnages reste égale ou supérieure au seuil inférieur respectif Var(X)$_{min}$ et qu'une durée maximale prédéterminée $t_2$ du palier de fonctionnement en cours n'a pas été atteinte, l'unité électronique de commande 3 retournera à l'étape d'échantillonnage S201, en passant par l'étape S203, dans laquelle une unité est ajoutée au compteur k. Cette boucle de retour peut aussi être temporisée, de manière à ce que l'échantillonnage des paramètres de fonctionnement X s'effectue à des intervalles réguliers dans le temps.

Si, par contre, les vacances Var(X) de tous les paramètres de fonctionnement X dans la fenêtre glissante des n derniers échantillonnages sont inférieures à leurs seuils inférieurs respectifs Var(X)$_{min}$, l'unité électronique de commande 3 passe à l'étape S215, dans laquelle la valeur absolue de la dérivée temporelle dX$_{filt}$/dt du signal filtré X$_{filt}$ correspondant à chaque paramètre de fonctionnement X est comparée à un seuil inférieur respectif |dX$_{filt}$/dt|$_{min}$. Si la valeur absolue de la dérivée temporelle dX$_{filt}$/dt correspondant à au moins un des paramètres de fonctionnement X reste égale ou supérieure au seuil inférieur respectif |dX$_{filt}$/dt|$_{min}$, et la durée maximale prédéterminée $t_2$ du palier de fonctionnement en cours n'a pas été atteinte, l'unité électronique de commande 3 retournera aussi à l'étape d'échantillonnage S201 en passant par l'étape S203. Cette boucle de retour peut aussi être temporisée pour assurer un échantillonnage régulier dans le temps des paramètres de fonctionnement X.

Si, par contre, non seulement les variances Var(X) de tous les paramètres de fonctionnement X sont toutes inférieures à leurs seuils inférieurs respectifs Var(X)$_{min}$, mais aussi les valeurs absolues des dérivées temporelles dX$_{filt}$/dt correspondant à tous les paramètres de fonctionnement X sont toutes inférieures à leurs seuils inférieurs respectifs |dX$_{filt}$/dt|$_{min}$, on peut considérer que les paramètres de fonctionnement X sont suffisamment stables pour que des espérances mathématiques E(X$_{filt}$) calculées sur base des signaux filtrés X$_{filt}$ correspondant aux paramètres de fonctionnement X dans la fenêtre glissante des n derniers échantillonnages soient représentatives d'un fonctionnement stationnaire du moteur-fusée 1 avec les consignes de fonctionnement correspondantes. En conséquence, dans l'étape suivante S216, ces espérances mathématiques E(X$_{filt}$) sont calculées par l'unité électronique de commande 3 pour ensuite être enregistrées dans l'étape S217, éventuellement ensemble avec les variances Var(X) et Var(dX$_{filt}$/dt) et les coefficients de dissymétrie g$_1$(X) de la fenêtre glissante des n derniers échantillonnages, avant de procéder à l'étape S211 de changement de valeur des consignes de fonctionnement transmises au moteur-fusée 1 pour passer à un nouveau palier de fonctionnement, ou éventuellement la séquence de paliers. Quoique dans le mode de réalisation illustré le passage aux étapes S216 et S217 est immédiat dès que les conditions considérées dans les étapes précédentes S214 et S215 sont remplies, il est envisageable de conditionner le passage aux étapes S216 et S217 à ce que les variances Var(X) et les dérivées temporelles dX$_{filt}$/dt restent toutes inférieures à leurs seuils inférieurs respectifs Var(X)$_{min}$ et |dX$_{filt}$/dt|$_{min}$ pendant une période de temps prédéterminée $t_1$ comprenant plusieurs cycles d'échantillonnage, En outre, afin d'éviter que le palier de fonctionnement soit maintenu de manière indéfinie si les paramètres de fonctionnement X n'arrivent pas à se stabiliser suffisamment pour remplir les conditions des étapes S214 et S215, le procédé illustré comprend aussi, en amont de l'étape S203, une étape S218 dans laquelle l'unité électronique de commande 3 contrôle si le palier de fonctionnement a été maintenu pendant une période de temps supérieure au délai prédéterminé $t_2$, Si ce délai $t_2$ a bien été excédé, la boucle de retour à travers l'étape S203 n'est pas complétée. Dans ce cas, l'unité électronique de commande 3 enregistre un troisième drapeau d'alerte dans l'étape S219, avant de finaliser le palier de fonctionnement en passant par les étapes S216 et S217 et passer au palier de fonctionnement suivant ou finaliser l'essai technique.

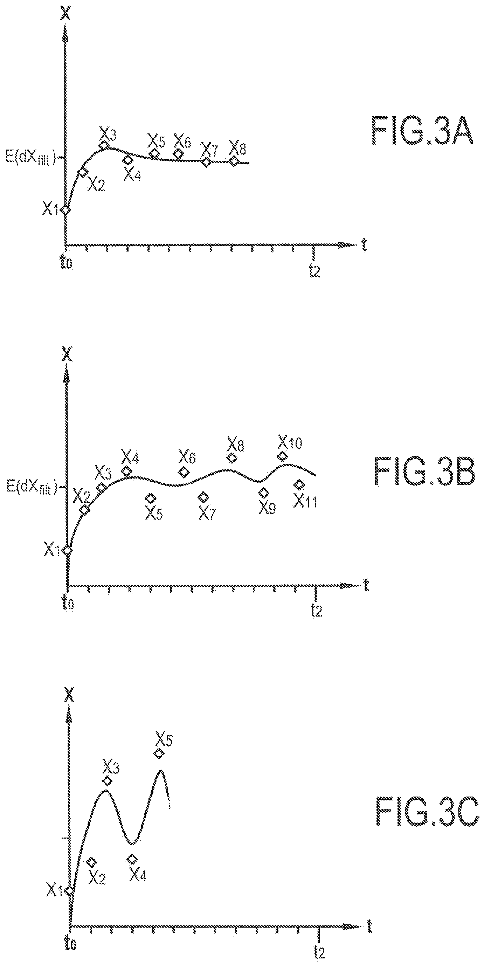

La figure 3A illustre un exemple de fonctionnement de ce procédé d'essai. A partir du début du palier de fonctionnement illustré, des valeurs de l'ensemble des paramètres de fonctionnement X sont échantillonnées régulièrement dans le temps. La figure 3A illustre l'évolution des valeurs échantillonnées pour l'un de ces paramètres de fonctionnement X, ainsi que d'un signal filtré X$_{filt}$ résultant du traitement des valeurs échantillonnées pour ce paramètre X dans l'étape de filtrage S206, Dans l'exemple illustré, les valeurs échantillonnées de ce paramètre X se stabilisent assez rapidement à un niveau stationnaire ou quasi-stationnaire après le début du palier de fonctionnement II n'est donc pas nécessaire de poursuivre ce palier de fonctionnement jusqu'à la fin de sa durée maximale $t_2$ pour obtenir une espérance mathématique E(X$_{filt}$) représentative de ce paramètre X avec les consignes de fonctionnement correspondantes à ce palier de fonctionnement. Si ceci est également le cas pour les autres paramètres de fonctionnement X, l'unité de commande 3 peut effectuer les étapes S216 et S217 pour finaliser ce palier de fonctionnement et passer au suivant.

La figure 3B illustre, par contre, un exemple de fonctionnement dans lequel le paramètre X illustré ne se stabilise pas suffisamment pour remplir les conditions des étapes S214 et S215 et finaliser le palier de fonctionnement avant la fin du délai $t_2$. En conséquence, et même si les autres paramètres de fonctionnement X se stabilisent avant, l'unité électronique de commande 3 ne passe au palier suivant qu'après que sa durée maximale $t_2$ se soit écoulée, et en enregistrant le troisième drapeau d'alerte susmentionné.

Finalement, la figure 3C illustre un cas dans lequel les valeurs échantillonnées du paramètre X illustré ne présentent apparemment pas une qualité suffisante, Dans ce cas, les conditions contrôlées dans les étapes S209 ou S212 pour poursuivre l'échantillonnage ne sont pas remplies, et le palier de fonctionnement est interrompu après avoir enregistré les premier ou deuxième drapeaux d'alerte susmentionnés. Si cette qualité insuffisante est indicative d'un manque de fiabilité persistant des valeurs captées pour les paramètres de fonctionnement X, par exemple si les mêmes drapeaux d'alerte ont été enregistrés lors de paliers précédents, il est envisageable d'interrompre non seulement ce palier de fonctionnement, mais l'ensemble de l'essai,

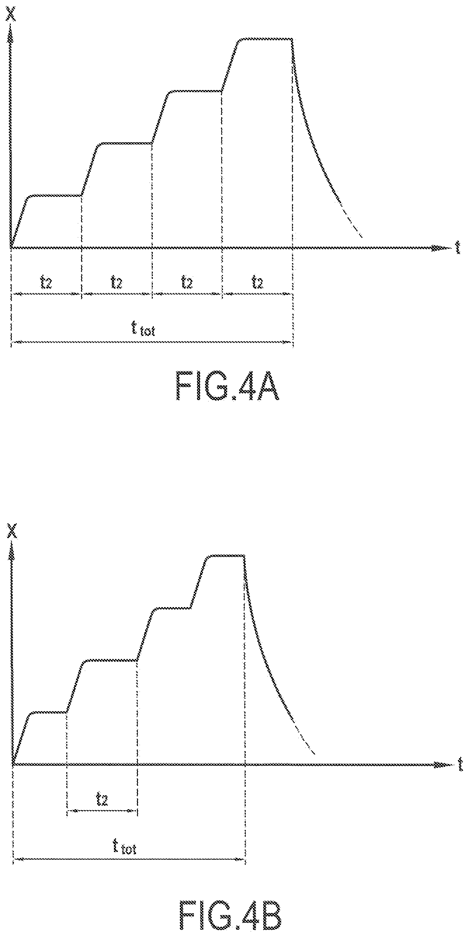

La figure 4A illustre l'évolution du paramètre X dans un essai technique comprenant une pluralité de paliers de fonctionnement, dans lequel chaque palier de fonctionnement serait maintenu pendant sa durée maximale $t_2$. Par contre, la figure 4B illustre l'évolution du même paramètre X dans un essai technique effectué suivant un mode de réalisation de l'invention, et dans lequel seulement le deuxième palier atteint sa durée maximale $t_2$, tandis que les autres sont finalisés avant cette durée maximale $t_2$, comme dans les exemples illustrés sur les figures 3A et 3C. En conséquence, cet essai technique peut avoir une durée totale $t_{tot}$ sensiblement inférieure à celle de l'essai illustré sur la figure 4A, tout en fournissant des données équivalentes pour les mêmes paliers de fonctionnement,

L'unité électronique de commande 3 peut être un ordinateur générique, programmé avec un ensemble d'instructions approprié. L'évaluation des résultats de l'essai peut être faite en temps différé, sur base des paramètres échantillonnés et filtrés pendant l'essai, et/ou des espérances mathématiques calculées pendant l'essai.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. Par conséquent, la description et les dessins drivent être considérés dans un sens illustratif plutôt que restrictif.

## Revendications

**1.** Procédé d'essai technique pour évaluer au moins un paramètre de fonctionnement (X) d'un dispositif sur une séquence de plusieurs paliers de fonctionnement, dont chacun correspond à une valeur stable d'au moins une consigne de fonctionnement du dispositif, le procédé comprenant au moins les étapes suivantes pour chaque palier de fonctionnement :

échantillonnage (S201) temporel de valeurs de l'au moins un paramètre de fonctionnement (X) ;
filtrage (S206) des valeurs échantillonnées pour obtenir un signal filtré ($X_{filt}$) pour chaque paramètre de fonctionnement (X) ;
calcul (S208) de la variance des valeurs échantillonnées pour chaque paramètre de fonctionnement (X) dans une fenêtre d'échantillonnage pendant ledit palier de fonctionnement ;
calcul (S207) de la valeur absolue de la dérivée temporelle du signal filtré ($X_{filt}$) pour chaque paramètre de fonctionnement (X) ; et
changement (S211) de valeur de ladite au moins une consigne de fonctionnement quand, pour chaque paramètre de fonctionnement (X), ladite variance des valeurs échantillonnées et la valeur absolue de la dérivée temporelle du signal filtré ($X_{filt}$) sont inférieures à des seuils inférieurs respectifs prédéterminés sur au moins une durée minimale prédéterminée.

**2.** Procédé d'essai technique suivant la revendication 1, dans lequel le changement (S211) de valeur de la consigne de fonctionnement est effectué après un délai de temps prédéterminé ($t_2$), même si pour au moins un paramètre de fonctionnement (X) la variance des valeurs échantillonnées et/ou la valeur absolue de la dérivée temporelle du signal filtré ne sont pas encore inférieures à leurs seuils inférieurs respectifs.

**3.** Procédé d'essai technique suivant l'une quelconque des revendications précédentes, dans lequel l'échantillonnage (S201) de valeurs de l'au moins un paramètre de fonctionnement (X) est effectué à des intervalles temporelles régulières.

4. Procédé d'essai technique suivant l'une quelconque des revendications précédentes, dans lequel ledit filtrage (S206) des valeurs échantillonnées est effectué par au moins un filtre de Kalman.

5. Procédé d'essai technique suivant l'une quelconque des revendications précédentes, comprenant aussi les étapes suivantes :

   calcul (S204) du coefficient de dissymétrie des valeurs échantillonnées pour chaque paramètre de fonctionnement (X) dans ladite fenêtre d'échantillonnage;
   calcul (S208) de la variance de la dérivée temporelle du signal filtré ($X_{filt}$), dans ladite fenêtre d'échantillonnage, pour chaque paramètre de fonctionnement (X) ; et
   changement (S211) de valeur de ladite consigne de fonctionnement, si le coefficient de dissymétrie des valeurs échantillonnées pour au moins un paramètre de fonctionnement excède un seuil supérieur prédéterminé et/ou les variances des valeurs échantillonnées et de la dérivées temporelle du signal filtré pour au moins un paramètre de fonctionnement excèdent des seuils supérieurs prédéterminés respectifs.

6. Procédé d'essai technique suivant l'une quelconque des revendications précédentes, dans lequel ladite fenêtre d'échantillonnage est une fenêtre glissante.

7. Procédé d'essai technique suivant l'une quelconque des revendications précédentes, dans lequel le dispositif est un moteur.

8. Procédé d'essai technique suivant la revendication 7, dans lequel ledit moteur est un moteur-fusée (1) à ergols liquides.

9. Procédé d'essai technique suivant la revendication 8, dans lequel ledit moteur-fusée (1) à ergols liquides comprend un système d'alimentation par turbopompe.

10. Unité électronique de commande (3) avec au moins une entrée de données pour recevoir au moins un paramètre de fonctionnement (X) d'un dispositif et au moins une sortie de données pour transmettre au moins une consigne de fonctionnement audit dispositif, ladite unité électronique de commande (3) étant configurée pour :

    commander un palier de fonctionnement du dispositif correspondant à une valeur stable de ladite consigne de fonctionnement ;
    échantillonner dans le temps des valeurs de l'au moins un paramètre de fonctionnement (X) ;
    filtrer les valeurs échantillonnées pour obtenir un signal filtrés ($X_{filt}$) pour chaque paramètre de fonctionnement (X) ;
    calculer la variance des valeurs échantillonnées pour chaque paramètre de fonctionnement (X) dans une fenêtre d'échantillonnage pendant ledit palier de fonctionnement ;
    calculer la valeur absolue de la dérivée temporelle du signal filtré ($X_{filt}$) pour chaque paramètre de fonctionnement (X) ; et
    changer la valeur de ladite au moins une consigne de fonctionnement quand, pour chaque paramètre de fonctionnement (X), la dispersion des valeurs échantillonnées et la valeur absolue de la dérivée temporelle du signal filtré sont inférieures à des seuils inférieurs respectifs prédéterminés.

**Patentansprüche**

1. Technisches Testverfahren zur Auswertung wenigstens eines Betriebsparameters (X) einer Vorrichtung über eine Folge von mehreren Betriebsstufen, von denen eine jede einem stabilen Wert von wenigstens einem Betriebssollwert der Vorrichtung entspricht, wobei das Verfahren wenigstens die folgenden Schritte für jede Betriebsstufe umfasst:

   zeitliches Sampling (S201) von Werten des wenigstens einen Betriebsparameters (X),
   Filtern (S206) der Abtastwerte, um ein gefiltertes Signal ($X_{filt}$) für einen jeden Betriebsparameter (X) zu erhalten,
   Berechnen (S208) der Varianz der Abtastwerte für einen jeden Betriebsparameter (X) in einem Sampling-Fenster während der Betriebsstufe,
   Berechnen (S207) des absoluten Wertes der zeitlichen Ableitung des gefilterten Signals ($X_{filt}$) für einen jeden Betriebsparameter (X), und
   Wertänderung (S211) des wenigstens einen Betriebssollwertes, wenn für jeden Betriebsparameter (X) die Varianz der Abtastwerte und der absolute Wert der zeitlichen Ableitung des gefilterten Signals ($X_{filt}$) kleiner als jeweilige vorbestimmte untere Schwellwerte über wenigstens eine vorbestimmte Mindestdauer sind.

2. Technisches Testverfahren nach Anspruch 1, bei dem die Wertänderung (S211) des Betriebssollwertes nach einer vorbestimmten Zeitspanne ($t_2$) erfolgt, selbst wenn für wenigstens einen Betriebsparameter (X) die Varianz der Abtastwerte und/oder der absolute Wert der zeitlichen Ableitung des gefilterten Signals noch nicht kleiner als ihre jeweiligen unteren Schwellwerte sind.

3. Technisches Testverfahren nach einem der vorhergehenden Ansprüche, bei dem das Sampling (S201) von Werten des wenigstens einen Betriebsparameters (X) in regelmäßigen Zeitabständen durchgeführt wird.

4. Technisches Testverfahren nach einem der vorhergehenden Ansprüche, bei dem das Filtern (S206) der Abtastwerte mit wenigstens einem Kalman-Filter durchgeführt wird.

5. Technisches Testverfahren nach einem der vorhergehenden Ansprüche, das auch die folgenden Schritte umfasst:

   Berechnen (S204) des Schiefemaßes der Abtastwerte für einen jeden Betriebsparameter (X) in dem Sampling-Fenster,
   Berechnen (S208) der Varianz der zeitlichen Ableitung des gefilterten Signals ($X_{filt}$) in dem Sampling-Fenster für einen jeden Betriebsparameter (X), und
   Wertänderung (S211) des Betriebssollwertes, wenn das Schiefemaß der Abtastwerte für wenigstens einen Betriebsparameter einen vorbestimmten oberen Schwellwert überschreitet und/oder die Varianzen der Abtastwerte und der zeitlichen Ableitung des gefilterten Signals für wenigstens einen Betriebsparameter jeweilige vorbestimmte obere Schwellwerte überschreiten.

6. Technisches Testverfahren nach einem der vorhergehenden Ansprüche, bei dem das Sampling-Fenster ein gleitendes Fenster ist.

7. Technisches Testverfahren nach einem der vorhergehenden Ansprüche, bei dem die Vorrichtung ein Triebwerk ist.

8. Technisches Testverfahren nach Anspruch 7, bei dem das Triebwerk ein Flüssigtreibstoff-Raketentriebwerk (1) ist.

9. Technisches Testverfahren nach Anspruch 8, bei dem das Flüssigtreibstoff-Raketentriebwerk (1) ein Turbopumpen-Zuführsystem umfasst.

10. Elektronische Steuereinheit (3) mit wenigstens einem Dateneingang, um wenigstens einen Betriebsparameter (X) einer Vorrichtung aufzunehmen, und wenigstens einem Datenausgang, um wenigstens einen Betriebssollwert an die Vorrichtung zu übertragen, wobei die elektronische Steuereinheit (3) dazu ausgelegt ist:

   eine Betriebsstufe der Vorrichtung, die einem stabilen Wert des Betriebssollwertes entspricht, zu steuern,
   Werte des wenigstens einen Betriebsparameters (X) zeitlich abzutasten,
   die Abtastwerte zu filtern, um ein gefiltertes Signal ($X_{filt}$) für einen jeden Betriebsparameter (X) zu erhalten,
   die Varianz der Abtastwerte für einen jeden Betriebsparameter (X) in einem Sampling-Fenster während der Betriebsstufe zu berechnen,
   den absoluten Wert der zeitlichen Ableitung des gefilterten Signals ($X_{filt}$) für einen jeden Betriebsparameter (X) zu berechnen, und
   den Wert des wenigstens einen Betriebssollwertes zu ändern, wenn für jeden Betriebsparameter (X) die Streuung der Abtastwerte und der absolute Wert der zeitlichen Ableitung des gefilterten Signals kleiner als jeweilige vorbestimmte untere Schwellwerte sind.

**Claims**

1. A technical test method for evaluating at least one operating parameter (X) of a device over a sequence of a plurality of operating stages, each stage corresponding to a stable value of at least one operating setpoint of the device, the device comprising at least the following steps for each operating stage:

   • sampling (S201) values of the at least one operating parameter (X) over time;

• filtering (S206) the sampled values in order to obtain a filtered signal ($X_{filt}$) for each operating parameter (X);
• calculating (S208) the variance of the sampled values for each operating parameter (X) in a sampling window during said operating stage;
• calculating (S207) the absolute value of the time derivative of the filtered signal ($X_{filt}$) for each operating parameter (X); and
• changing (S211) the value of said at least one operating setpoint when, for each operating parameter (X), said variance of the sampled values and the absolute value of the time derivative of the filtered signal ($X_{filt}$) are less than respective predetermined lower thresholds over at least a predetermined minimum duration.

2. A technical test method according to claim 1, wherein the value of the operating setpoint is changed (S211) after a predetermined time period ($t_2$), even if for at least one operating parameter (X) the variance of the sampled values and/or of the absolute value of the time derivative of the filtered value are still not below their respective lower thresholds.

3. A technical test method according to either preceding claim, wherein the values of the at least one operating parameter (X) are sampled (S201) at regular time intervals.

4. A technical test method according to any preceding claim, wherein said filtering (S206) of the sampled values is performed by at least one Kalman filter.

5. A technical test method according to any preceding claim also comprising the following steps:

• calculating (S204) the measure of skewness of the sampled values for each operating parameter (X) in said sampling window;
• calculating (S208) the variance of the time derivative of the filtered signal ($X_{filt}$) in said sampling window for each operating parameter (X); and
• changing (S211) the value of said operating setpoint if the measure of skewness of the sampled values for at least one operating parameter exceeds a predetermined upper threshold and/or the variances of the sample values and the time derivative of the filtered signal for at least one operating parameter exceed respective predetermined upper thresholds.

6. A technical test method according to any preceding claim, wherein said sampling window is a moving window.

7. A technical test method according to any preceding claim, wherein the device is an engine.

8. A technical test method according to claim 7, wherein said engine is a liquid-propellant rocket-engine (1).

9. A technical test method according to claim 8, wherein said liquid-propellant rocket-engine (1) includes a turbopump feed system.

10. An electronic control unit (3) with at least one data input for receiving at least one operating parameter (X) of a device and at least one data output for transmitting at least one operating setpoint to said device, said electronic control unit (3) being configured to:

• order an operating stage of the device corresponding to a stable value of said operating setpoint;
• sample values of the at least one operating parameter (X) over time;
• filter the sampled values in order to obtain a filtered signal ($X_{filt}$) for each operating parameter (X) ;
• calculate the variance of the sampled values for each operating parameter (X) in a sampling window during said operating stage;
• calculate the absolute value of the time derivative of the filtered signal ($X_{filt}$) for each operating parameter (X); and
• change the value of said at least one operating setpoint when, for each operating parameter (X), said variance of the sampled values and the absolute value of the time derivative of the filtered signal ($X_{filt}$) are less than respective predetermined lower thresholds over at least a predetermined minimum duration.

FIG.1

FIG.2

FIG.3A

FIG.3B

FIG.3C

FIG.4A

FIG.4B

14

## RÉFÉRENCES CITÉES DANS LA DESCRIPTION

**Documents brevets cités dans la description**

- FR 2965915